# FASCICULE DE BREVET EUROPEEN

(11) **EP 2 044 367 B1**
(45) Date de publication et mention de la délivrance du brevet: **04.01.2017**
(21) Numéro de dépôt: 07823557.9
(22) Date de dépôt: 10.07.2007
(51) Int. Cl.: F23D 14/32

(54) **BRULEUR ET PROCEDE POUR LA MISE EN OEUVRE ALTERNEE D'UNE OXYCOMBUSTION ET D'UNE AEROCOMBUSTION**
BRENNER UND VERFAHREN FÜR EINE ABWECHSELNDE VERBRENNUNG MIT SAUERSTOFF UND LUFT
BURNER AND METHOD FOR THE ALTERNATE IMPLEMENTATION OF OXYCOMBUSTION AND AEROCOMBUSTION

(30) Priorité: 13.07.2006 FR 0652974
(43) Date de publication de la demande: 08.04.2009
(73) Titulaire: L'AIR LIQUIDE, Société Anonyme pour l'Etude et l'Exploitation des Procédés Georges Claude, 75007 Paris (FR)
(72) Inventeur: DE SMEDT, Guillaume, 92160 Antony (FR); IMBERNON, Christian, 94320 Thiais (FR); MULON, Jacques, 91300 Massy (FR); RECOURT, Patrick, Jean-Marie, 91460 Marcoussis (FR); SANCHEZ MOLINERO, Ivan, 78000 Versailles (FR); TSIAVA, Remi, Pierre, 91250 St Germain Les Corbeil (FR)
(74) Mandataire: Conan, Philippe Claude
(86) Numéro de dépôt international: PCT/FR2007/051634
(87) Numéro de publication internationale: WO 2008/007016

(56) Documents cités:
- EP-A2- 0 204 912
- EP-A2- 0 877 202
- GB-A- 1 523 437
- US-A1- 2002 197 574

## Description

La présente invention concerne un brûleur et un procédé de combustion pouvant mettre en oeuvre alternativement un gaz fortement oxygéné ou de l'air comme comburant.

GB-A-1523437 montre un brûleur pour l'aérocombustion d'un combustible liquide.

Ledit brûleur comporte une tige centrale se terminant en une buse d'atomisation.

Ladite tige est entourée d'un passage annulaire pour l'injection d'air présentant une surface interne frustoconique divergente, ladite surface interne coopérant avec une surface externe de la buse d'atomisation de forme analogue. Le passage annulaire est muni de moyens pour la mise en rotation de l'air.

Le passage annulaire est entouré d'un deuxième passage d'air présentant une sortie convergente et étant également muni de moyens pour la mise en rotation de l'air, avec le même sens de rotation comme dans le premier passage annulaire d'air.

L'ensemble décrit ci-dessus permet l'injection de combustible liquide et d'air primaire.

Autour de cet ensemble se trouve un dispositif pour l'injection d'air secondaire. Ce dispositif présente deux passages d'air secondaire qui entourent coaxialement l'ensemble et sont munis de moyens pour la mise en rotation de l'air secondaire. Le passage d'air secondaire le plus à l'intérieur est cylindrique. La manche entourant le passage d'air secondaire le plus à l'extérieur se termine en une extrémité qui peut être convergente ou cylindrique.

Un autre brûleur pour la combustion d'un combustible liquide ou solide est connu de EP-A-0204912.

Ledit brûleur comporte un atomiseur central pour l'atomisation assisté d'un combustible liquide ou d'une suspension liquide d'un combustible solide. Ledit atomiseur central est coaxialement entouré de deux passages de gaz.

Le passage de gaz entourant directement de l'atomiseur est un passage pour l'injection d'air primaire, ledit passage étant muni de moyens pour la mise en rotation de l'air primaire et présentant une sortie divergente par rapport à l'axe du brûleur.

Le passage d'air primaire est entouré du deuxième passage de gaz. Le deuxième passage de gaz injecte du gaz secondaire, peut être muni de moyens pour la mise en rotation du gaz secondaire et présente une ouverture divergente par rapport à l'axe du brûleur.

Avec les contraintes environnementales de plus en plus contraignantes, notamment en terme de production de CO₂ et NOₓ, la combustion d'un combustible à l'aide d'oxygène ou d'un gaz fortement oxygéné devient de plus en plus attractive pour la combustion de combustibles fossiles. Or les dispositifs de combustion traditionnels mettant en oeuvre de l'air comme comburant n'ont pas toujours la géométrie, ni les matériaux requis, pour fonctionner avec de l'oxygène ou un gaz fortement oxygéné. En effet, l'absence du ballast d'azote en combustion fortement ou totalement oxygénée modifie significativement les modes de transfert thermique, les concentrations d'espèces et les régimes de pression à l'intérieur de la chambre de combustion.

Pour pouvoir fonctionner en combustion tout oxygène dans ces installations, une solution proposée est de réinjecter de la fumée provenant de cette combustion ou d'une autre combustion pour compenser en partie l'absence de l'azote. Cette manière de faire permet d'éviter une production de NOₓ importante grâce à la fois à l'absence d'azote, mais aussi d'une température de flamme plus faible qu'en combustion tout oxygène. Cependant la fumée réinjectée fait souvent disparaître les bienfaits de l'oxycombustion comme notamment la baisse des taux d'imbrûlés des résidus lourds de pétrole ou la diminution d'une partie des cendres, ces imbrûlés et ces cendres sont alors des sources de complications dans le procédé de traitement des fumées en aval.

Cette injection de la fumée peut être essentiellement faite de deux manières. Tout d'abord en mélangeant cette fumée à l'oxygène avant son introduction dans le brûleur de manière à reconstituer un comburant comprenant environ 21 à 27 % d'oxygène et en complément essentiellement du CO₂ à la place de l'azote. Un avantage que l'on peut trouver pour cette solution dans le cas d'une conversion d'une chaudière à l'air est la possibilité de garder les brûleurs air avec des aménagements de fonctionnement pas trop rudes. Par contre, le prémélange des fumées de combustion et de l'oxygène avant leur introduction dans le brûleur peut générer des problèmes de sécurité. Pour éviter ce problème, selon une deuxième manière, la fumée peut également être injectée de manière indépendante soit à un endroit de la chambre de combustion, soit au travers du brûleur. Dans ce dernier cas, l'injection de la fumée se fait à une vitesse telle qu'elle rallonge la flamme qui peut surchauffer des éléments de la chambre de combustion (mur opposé ou tubes, dans le cas d'une chaudière). Pour éviter ce problème, les vitesses d'injection de fumée doivent être faibles ce qui a pour effet d'augmenter la taille du brûleur et de créer des problèmes d'emplacement alors que l'on sait bien qu'il faut maximiser les surfaces de la chambre de combustion.

Les problèmes précédents indiquent donc qu'il est nécessaire d'améliorer les procédés et les brûleurs d'oxy-combustion mettant en oeuvre le recyclage de fumées de combustion.

En outre, la pratique montre qu'il est utile de pouvoir utiliser les brûleurs de combustion en mode flexible, c'est-à-dire alternativement en oxy-combustion et en aéro-combustion. En effet, en raison des contraintes de disponibilité de l'oxygène et/ou de procédures de sécurité, il peut être utile de pouvoir transformer une oxy-combustion en aéro-combustion sans changer de brûleur. De même, pour certains types de combustion, il est préférable de commencer la combustion à l'air puis de passer ensuite à une oxy-combustion pour des raisons de sécurité.

Le but de la présente invention est donc de proposer un dispositif permettant de mettre en oeuvre une oxycombustion avec recyclage de fumée dans un dispositif conçu pour une aéro-combustion.

Un autre but de la présente invention est de proposer un dispositif de combustion permettant de mettre en oeuvre alternativement une oxycombustion avec recyclage des fumées ou une aéro-combustion.

Un autre but de la présente invention est de proposer un dispositif de combustion permettant de mettre en oeuvre alternativement une oxycombustion avec recyclage des fumées ou une aéro-combustion, lesdites combustions produisant une flamme de taille contrôlée.

Dans ce but, l'invention concerne un procédé de combustion d'au moins un combustible au moyen d'au moins un comburant et d'au moins un gaz majoritairement inerte dans lequel :
- on injecte le combustible et le comburant de manière à créer une flamme,
- on injecte le gaz majoritairement inerte sous forme de deux jets, de manière à ce que :
   - le premier jet entoure la flamme créée par le combustible et le comburant et ledit premier jet présente un swirl divergent par rapport à ladite flamme,
   - le second jet entoure le premier jet de gaz majoritairement inerte et ledit second jet présente un swirl convergent par rapport à la flamme créée par le combustible et le comburant.

L'invention concerne également un brûleur susceptible de mettre en oeuvre ledit procédé et comprenant :
- au moins un moyen d'injection de combustible et au moins un moyen d'injection de comburant, lesdits moyens étant disposés l'un par rapport à l'autre de manière à ce que le comburant et le combustible soient susceptibles de produire une flamme,
- deux moyens d'injection d'un gaz majoritairement inerte :
   - le premier moyen d'injection du gaz majoritairement inerte étant apte à injecter une partie du gaz majoritairement inerte sous la forme d'un jet entourant la flamme produite par le comburant et le premier combustible, et ledit premier moyen d'injection du gaz majoritairement inerte comprenant un moyen apte à mettre en rotation divergente le flux de gaz majoritairement inerte le traversant,
   - le deuxième moyen d'injection du gaz majoritairement inerte étant apte à injecter une partie du gaz majoritairement inerte sous la forme d'un jet entourant le jet de gaz majoritairement inerte produit par le premier moyen d'injection du gaz majoritairement inerte, et ledit deuxième moyen d'injection du gaz majoritairement inerte comprenant un moyen apte à mettre en rotation convergente le flux de gaz majoritairement inerte le traversant.

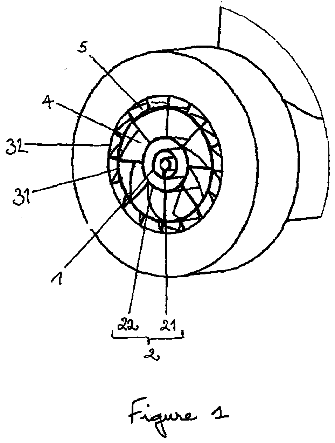

D'autres caractéristiques et avantages de l'invention apparaîtront à la lecture de la description qui va suivre. Des formes et des modes de réalisation de l'invention sont donnés à titre d'exemples non limitatifs, illustrés par la figure 1 qui est une vue schématique d'un brûleur selon l'invention.

L'invention concerne donc un procédé de combustion d'au moins un combustible au moyen d'au moins un comburant et d'au moins un gaz majoritairement inerte dans lequel :
- on injecte le combustible et le comburant de manière à créer une flamme,
- on injecte le gaz majoritairement inerte sous forme de deux jets, de manière à ce que :
   - le premier jet entoure la flamme créée par le combustible et le comburant et ledit premier jet présente un swirl divergent par rapport à ladite flamme,
   - le second jet entoure le premier jet de gaz majoritairement inerte et ledit second jet présente un swirl convergent par rapport à la flamme créée par le combustible

Le procédé selon l'invention met en oeuvre la combustion principale d'un combustible par un comburant. Le combustible peut être de toute nature liquide ou gazeuse. Lorsqu'il est gazeux, le combustible peut être du gaz naturel, du gaz de mine, du gaz de cokerie, du gaz de hauts-fourneaux, du gaz de raffinerie ou du gaz de synthèse. Lorsqu'il est liquide, le combustible peut être choisi parmi le fuel domestique, le fuel lourd, l'asphalte, les résidus de raffinerie, le pétrole brut. Le procédé peut concerner la combustion de plusieurs types de combustible, par exemple du gaz naturel et du fioul liquide. Ces différents types de combustibles sont injectés de manière à former une flamme avec le comburant. Les injections du ou des combustibles et du comburant peut se faire de toute manière connue de l'homme du métier permettant de produire une flamme. Selon le procédé de l'invention, un gaz majoritairement inerte est également injecté. Par "gaz majoritairement inerte", on entend un gaz ou un mélange gazeux dont la composition molaire comprend au plus 50 % d'oxygène. Généralement, le gaz majoritairement inerte comprend au moins l'un des composés suivants : CO₂, N₂, H₂O, Ar, de préférence dans une quantité molaire d'au moins 50 %. La nature du gaz majoritairement inerte peut être identique ou non à celle du comburant selon le mode de fonctionnement du procédé soit en aéro-combustion, soit en oxy-combustion. Quelque soit ce mode de fonctionnement, le gaz majoritairement inerte est injecté sous forme de deux jets. Le premier jet entoure la flamme créée par le combustible et le comburant et le second jet entoure ce premier jet de gaz majoritairement inerte. Par conséquent, le second jet entoure également la flamme créée par le combustible et le comburant, mais se trouve à une distance plus éloignée de la flamme que le second jet de gaz majoritairement inerte ; dans la demande, on parlera du premier jet de gaz majoritairement inerte comme du jet périphérique interne et on parlera du second jet de gaz majoritairement inerte comme du jet périphérique externe. Par entourer, on entend le fait que ces jets de gaz majoritairement inerte encerclent la flamme centrale du combustible et du comburant. Selon un mode préféré, les jets de gaz majoritairement inerte présentent la forme d'anneaux centrés sur la flamme de combustible et de comburant.

Selon l'invention, le jet périphérique interne présente un swirl divergent par rapport à la flamme de combustible et de comburant. Par swirl d'un jet, on entend un mouvement de rotation du jet sur lui-même. Le jet périphérique interne est donc un jet en rotation sur lui-même. Du fait que ce jet entoure la flamme du combustible et du comburant, ce jet périphérique interne est également en rotation autour de ladite flamme. Selon l'invention, cette rotation est divergente, c'est-à-dire que dans le jet périphérique interne, le gaz majoritairement inerte s'éloigne de la flamme de combustible et de comburant au fur et à mesure de son injection.

Selon l'invention, le jet périphérique externe présente un swirl convergent par rapport à la flamme de combustible et de comburant. Comme le jet périphérique interne, le jet périphérique externe est également en rotation autour de ladite flamme. Selon l'invention, cette rotation est convergente, c'est-à-dire que, dans le jet périphérique externe, le gaz majoritairement inerte s'éloigne de la flamme de combustible et de comburant au fur et à mesure de son injection.

Que cela soit pour le jet périphérique externe ou le jet périphérique externe, le taux de swirl de chacun de ces jets de gaz majoritairement inerte est avantageusement compris entre 0,26 et 1,73. Le taux de swirl S est défini est défini comme suit : S = It/Ia, It et la étant respectivement les impulsions tangentielle et axiale du fluide mis en rotation dans un jet.

Le procédé selon l'invention permet de contrôler la longueur de la flamme en modifiant le ratio du débit du jet périphérique sur le débit du jet interne.

Le procédé selon l'invention peut être mis en oeuvre aussi bien pour un procédé d'oxy-combustion que pour un procédé d'aéro-combustion. Selon un premier mode de mise en oeuvre du procédé, il s'agit dune oxycombustion, ce qui signifie qu'un des deux comburants est un gaz oxygéné. Par gaz oxygéné, on entend un gaz présentant une concentration en oxygène supérieure à 80 %, de préférence supérieure à 90 %. Selon ce **premier mode,** le comburant est un gaz oxygéné et le gaz majoritairement inerte est composé des gaz issus d'une combustion. Les gaz issus d'une combustion comprennent généralement majoritairement, voire uniquement du CO₂. Ces gaz peuvent également comprendre H₂O._De préférence, le gaz majoritairement inerte est composé au moins en partie des gaz issus de la combustion du présent procédé et qui sont recyclés dans le procédé de combustion. Dans ce cas, les fumées sont recyclées extérieurement à la chambre de combustion dans lequel le présent procédé est mis en oeuvre. Elles peuvent être traitées avant d'être recyclées. Généralement, au plus 4 Nm³ de fumées sont recyclées dans le procédé selon l'invention. Selon ce premier mode, il est préférable que le débit de gaz majoritairement inerte injecté dans le premier jet de gaz majoritairement inerte représente 50 à 97 % du débit total de gaz majoritairement inerte injecté. Cette distribution du gaz majoritairement inerte entre les jets périphériques interne et externe permet d'éviter de remontées de gaz chauds dans la chambre de combustion. De plus, les gaz issus d'une combustion injectés sous forme des jets périphériques interne et externe ne perturbent pas la flamme issue de la combustion du combustible et du gaz oxygéné, mais créent dans la proximité du nez du brûleur un couloir qui protège les parois de la chambre de combustion d'un rayonnement trop intense. Au-delà du nez du brûleur, les gaz issus d'une combustion et injectés sous forme des jets périphériques interne et externe et les gaz chauds issus de la propre combustion du procédé se mélangent pour ne former qu'un mélange homogène. Selon de premier mode, des gaz issus d'une combustion peuvent également être injectés dans au moins un point de la chambre de combustion différent des points d'injection des jets périphériques interne et externe.

Selon un **deuxième mode** de mise en oeuvre du procédé, le procédé est une aéro-combustion, ce qui signifie que les deux comburants sont de l'air (ou aucun des comburants n'est un gaz oxygéné). Selon ce deuxième mode, le comburant est de l'air et le gaz majoritairement inerte est de l'air également. De préférence, on utilise de l'air déshuilé car cet air circule dans des moyens d'injection pouvant également servir à l'injection d'un gaz oxygéné en mode d'oxy-combustion ; ce moyen d'injection ne doit donc pas comprendre de matière grasse en cas d'injection de gaz oxygéné. De préférence, le débit d'air injecté comme comburant représente 5 à 30 % du débit total d'air injecté dans le procédé. Il est également préférable que le débit d'air injecté dans le premier jet de gaz majoritairement inerte représente 4 à 25 % du débit total d'air injecté dans le procédé. De préférence, le débit total d'air injecté dans le procédé peut correspondre à la quantité d'air nécessaire à la combustion du combustible. Cette répartition du débit d'air dans les jets périphériques interne et externe permet de faire converger l'air vers le combustible de manière à accrocher la flamme au nez du brûleur et à la raccourcir de manière à éviter la surchauffe des murs de la chambre de combustion.

Selon un **troisième mode** de mise en oeuvre du procédé, le comburant est un gaz oxygéné et le gaz majoritairement inerte est de l'air. Ce troisième mode est particulièrement utilisé pour le démarrage du procédé de combustion.

L'invention concerne également un brûleur comprenant :
- au moins un moyen d'injection de combustible et au moins un moyen d'injection de comburant, lesdits moyens étant disposés l'un par rapport à l'autre de manière à ce que le comburant et le premier combustible soient susceptibles de produire une flamme,
- deux moyens d'injection d'un gaz majoritairement inerte :
   - le premier moyen d'injection du gaz majoritairement inerte étant apte à injecter une partie du gaz majoritairement inerte sous la forme d'un jet entourant la flamme produite par le comburant et le combustible, et ledit premier moyen d'injection du gaz majoritairement inerte comprenant un moyen apte à mettre en rotation divergente le flux de gaz majoritairement inerte le traversant,
   - le deuxième moyen d'injection du gaz majoritairement inerte étant apte à injecter une partie du gaz majoritairement inerte sous la forme d'un jet entourant le jet de gaz majoritairement inerte produit par le premier moyen d'injection du gaz majoritairement inerte, et ledit deuxième moyen d'injection du gaz majoritairement inerte comprenant un moyen apte à mettre en rotation convergente le flux de gaz majoritairement inerte le traversant.

Le brûleur selon l'invention comprend donc une première partie centrale comprenant au moins un moyen d'injection de combustible et au moins un moyen d'injection de comburant. Ces deux moyens d'injection doivent être disposés l'un par rapport à l'autre de manière à ce que comburant et combustible soient susceptibles de produire une flamme lorsque le brûleur fonctionne. Ainsi les moyens d'injection de combustible et de comburant peuvent être des tubes coaxiaux ou des tubes séparés. Toute technique connue d'injection de combustible et de comburant de manière à former une flamme peut être utilisée.

Le brûleur comprend une deuxième partie périphérique constituée des deux moyens d'injection du gaz majoritairement inerte. Les deux parties du brûleur peuvent être adjacentes, ou séparées par une cloison. De préférence, les moyens aptes à mettre en rotation convergente les flux de gaz majoritairement inerte traversant le premier moyen d'injection ou le deuxième moyen d'injection met lesdits flux en rotation avec un taux de swirl compris entre 0,26 et 1,73. Ce moyen apte à mettre en rotation divergente ou divergente est généralement un déflecteur.

Selon un mode particulier, le brûleur est tel que :
- le premier moyen d'injection du gaz majoritairement inerte est composé de deux tubes coaxiaux centrés autour du moyen d'injection du combustible et du moyen d'injection du comburant, l'espace entre les deux tubes permettant le passage d'une partie du gaz majoritairement inerte et comprenant le moyen apte à mettre en rotation divergente le flux de gaz majoritairement inerte le traversant,
- le deuxième moyen d'injection du gaz majoritairement inerte est composé de deux tubes coaxiaux centrés autour des deux tubes coaxiaux du premier moyen d'injection du gaz majoritairement inerte, l'espace entre les deux tubes du deuxième moyen d'injection du gaz majoritairement inerte permettant le passage d'une partie du gaz majoritairement inerte et comprenant le moyen apte à mettre en rotation convergente le flux de gaz majoritairement inerte le traversant.

Selon ce mode particulier, le brûleur peut également comprendre deux moyens d'injection du comburant, lesdits moyens étant des tubes coaxiaux et le moyen d'injection du combustible peut être une couronne métallique percée d'au moins une couronne d'orifices, ladite couronne métallique étant coaxiale avec les tubes d'injection du comburant et placée entre lesdits tubes. Le brûleur est alors composé de quatre tubes coaxiaux et de la couronne métallique percée d'orifices disposés en couronne, ladite couronne étant placé entre la tube le plus petit et le tube de diamètre immédiatement supérieur.

Selon l'invention, le brûleur peut comprendre deux moyens d'injection de combustible distincts pour l'injection de deux combustibles différents.

Un procédé de conversion non conforme à l'invention d'un brûleur aéro-combustible comprenant au moins un moyen d'injection d'un combustible et au moins un moyen d'injection d'air, lesdits moyens étant disposés l'un par rapport à l'autre de manière à ce que l'air et le premier combustible soient susceptibles de produire une flamme, en un brûleur oxy-combustible consiste à compléter ledit brûleur par deux moyens d'injection de comburant :
- le premier moyen d'injection du comburant étant apte à injecter une partie de comburant sous la forme d'un jet entourant le brûleur aéro-combustible, et ledit premier moyen d'injection de comburant comprenant un moyen apte à mettre en rotation divergente le flux de comburant le traversant,
- le deuxième moyen d'injection de comburant étant apte à injecter une partie du gaz majoritairement inerte sous la forme d'un jet entourant le brûleur aéro-combustible, et ledit deuxième moyen d'injection de comburant comprenant un moyen apte à mettre en rotation convergente le flux de comburant le traversant.

Ainsi, il est possible de transformer un brûleur aéro-combustible en brûleur oxy-combustible permettant la combustion du même combustible avec un gaz oxygéné. La transformation consiste à rajouter au brûleur aéro-combustible deux moyens d'injection de comburant. Ces moyens d'injection doivent être disposés de manière à permettre l'injection d'un premier jet de comburant sous une forme entourant le brûleur aéro-combustible et l'injection d'un deuxième jet de comburant sous une forme entourant le premier jet de comburant et donc le brûleur aéro-combustible. En outre ces deux moyens d'injection doivent être équipés de moyens permettant de leur donner un mouvement de rotation (swirl) : le jet le plus proche de la flamme présentant un swirl divergent et le second un swirl convergent.

L'invention concerne enfin un procédé de conversion d'un procédé d'aéro-combustion d'un combustible dans lequel on injecte le combustible et l'air de manière à créer une flamme, en procédé d'oxy-combustion, dans lequel :
- on remplace l'air par un gaz oxygéné, et
- on injecte des gaz issus d'une combustion sous forme de deux jets, de manière à ce que :
   - le premier jet entoure la flamme créée par le combustible et le gaz oxygéné et ledit premier jet présente un swirl divergent par rapport à ladite flamme,
   - le second jet entoure le premier jet gaz issus d'une combustion et ledit second jet présente un swirl convergent par rapport à la flamme créée par le combustible et le gaz oxygéné.

Ainsi, il est possible de transformer un procédé d'aéro-combustion mettant en oeuvre une combustion air/combustible en un procédé d'oxy-combustion mettant en oeuvre la combustion du même combustible avec un gaz oxygéné. La transformation consiste à remplacer l'air par un gaz oxygéné dans le procédé initial et à injecter des gaz issus d'une combustion en complément de cette oxy-combustion. Les gaz issus d'une combustion peuvent être les gaz issus de l'oxy-combustion, qui ont été recyclés, ou peuvent provenir d'une autre combustion. Ces gaz issus d'une combustion doivent être introduits dans le procédé d'oxy-combustion sous forme de deux jets entourant tout deux la flamme créée par le combustible et le gaz oxygéné, le deuxième jet entourant lui-même le premier jet. En outre, le premier jet, qui est le plus proche de la flamme oxy-combustible, doit présenter un effet de rotation divergent par rapport à la flamme créée par le combustible et le gaz oxygéné et le deuxième jet, qui est le plus proche de la flamme oxy-combustible, doit présenter un effet de rotation convergent par rapport à la flamme créée par le combustible et le gaz oxygéné.

La figure 1 représente l'extrémité d'un brûleur selon l'invention. Il comprend une première partie centrale constituée :
- d'un moyen d'injection de combustible 1 qui est un tube,
- d'un moyen d'injection d'un comburant 2 qui comprend deux tubes 21 et 22 : l'un 21 est placé au centre du tube d'injection de combustible 1 et l'autre 22 autour de même tube d'injection de combustible 1.

Le brûleur comprend également une deuxième partie qui est un moyen d'injection d'un gaz majoritairement inerte ; il comprend 3 tubes coaxiaux 22, 31, 32 centrés sur la première partie centrale, le tube le plus petit correspondant au tube 22 d'injection de combustible 1. L'espace entre le tube le plus grand 32 et le tube intermédiaire 31 comprend un moyen 4 (ailettes) apte à mettre en rotation divergente le flux de gaz majoritairement inerte le traversant. L'espace entre le tube intermédiaire 31 et le tube le plus petit 22 comprend un moyen 5 (ailettes) apte à mettre en rotation convergente le flux de gaz majoritairement inerte le traversant.

Un avantage de l'invention est qu'elle permet de modifier un brûleur fonctionnant habituellement à l'air de manière à ce qu'il fonctionne avec un gaz oxygéné et des fumées oxygénées. Il suffit de compléter le brûleur à air correspondant à la première partie du brûleur selon l'invention par la deuxième partie du brûleur selon l'invention permettant l'injection des fumées recyclées. Le gaz oxygéné est alors injecté dans la première partie du brûleur et les fumées sont injectées dans la deuxième partie.

Un avantage du brûleur selon l'invention est qu'il peut fonctionner avec uniquement de l'air comme comburant tout en conservant le débit de combustible utilisé en oxy-combustion. Cette contrainte de fonctionnement en tout air peut être requise pour la continuité de production dans des situations où la fourniture d'oxygène au brûleur est interrompue.

Un avantage du brûleur et du procédé de combustion selon l'invention est qu'ils produisent une flamme de taille contrôlée, ce qui est utile dans des enceintes confinées, telles des chambres de combustion de chaudières où le contact direct de la flamme excessivement longue avec des tubes en acier nu est fatal. Dans ce dernier cas, la géométrie de la flamme produite par le brûleur selon l'invention permet une répartition homogène du flux thermique sur toutes les surfaces internes de la chaudière ; une chaudière équipée de ce brûleur marchant en oxycombustion accepte une densité énergétique allant jusqu'à 0,600 MW/m³ suivant le taux de fumée recyclée.

Un autre avantage du brûleur et du procédé de combustion selon l'invention marchant avec un gaz oxygéné est qu'ils produisent une flamme dont la température de coeur élevée, ce qui permet de diminuer significativement les imbrûlés.

## Revendications

1. Procédé de combustion d'au moins un combustible au moyen d'au moins un comburant et d'au moins un gaz majoritairement inerte dans lequel :
- on injecte le combustible et le comburant de manière à créer une flamme,
- on injecte le gaz majoritairement inerte sous forme de deux jets, de manière à ce que :
. le premier jet entoure la flamme créée par le combustible et le comburant et ledit premier jet présente un swirl divergent par rapport à ladite flamme,
. le second jet entoure le premier jet de gaz majoritairement inerte et ledit second jet présente un swirl convergent par rapport à la flamme créée par le combustible et le comburant.

2. Procédé selon la revendication 1, **caractérisé en ce que** le comburant est un gaz oxygéné et le gaz majoritairement inerte est composé des gaz issus d'une combustion.

3. Procédé selon la revendication précédente, **caractérisé en ce que** le gaz majoritairement inerte est composé au moins en partie des gaz issus de la combustion dudit procédé et recyclés.

4. Procédé selon la revendication 2 ou 3, **caractérisé en ce que** le débit de gaz majoritairement inerte injecté dans le premier jet de gaz majoritairement inerte représente 50 à 97 % du débit total de gaz majoritairement inerte injecté.

5. Procédé selon la revendication 1 **caractérisé en ce que** le comburant est de l'air, de préférence déshuilé, et le gaz majoritairement inerte est de l'air.

6. Procédé selon la revendication précédente, **caractérisé en ce que** le débit d'air injecté comme comburant représente 5 à 30 % du débit total d'air nécessaire à la combustion du combustible.

7. Procédé selon la revendication 5 ou 6, **caractérisé en ce que** le débit d'air injecté dans le premier jet de gaz majoritairement inerte représente 4 à 25 % du débit total d'air nécessaire à la combustion du combustible.

8. Procédé selon la revendication 1 **caractérisé en ce que** le comburant est un gaz oxygéné et le gaz majoritairement inerte est de l'air.

9. Procédé selon l'une des revendications précédente, **caractérisé en ce que** le taux de swirl de chacun des jets de gaz majoritairement inerte est compris entre 0,26 et 1,73.

10. Procédé selon l'une des revendications précédente, **caractérisé en ce que** les jets de gaz majoritairement inerte présentent la forme d'anneaux.

11. Brûleur comprenant :
- au moins un moyen d'injection de combustible (1) et au moins un moyen d'injection de comburant, lesdits moyens étant disposés l'un par rapport à l'autre de manière à ce que le comburant et le combustible soient susceptibles de produire une flamme,
- deux moyens d'injection d'un gaz majoritairement inerte:
. le premier moyen d'injection du gaz majoritairement inerte étant apte à injecter une partie du gaz majoritairement inerte sous la forme d'un jet entourant la flamme produite par le comburant et le combustible, et ledit premier moyen d'injection du gaz majoritairement inerte comprenant un moyen (4) apte à mettre en rotation divergente le flux de gaz majoritairement inerte le traversant,
. le deuxième moyen d'injection du gaz majoritairement inerte étant apte à injecter une partie du gaz majoritairement inerte sous la forme d'un jet entourant le jet de gaz majoritairement inerte produit par le premier moyen d'injection du gaz majoritairement inerte, et ledit deuxième moyen d'injection du gaz majoritairement inerte comprenant un moyen (5) apte à mettre en rotation convergente le flux de gaz majoritairement inerte le traversant.

12. Brûleur selon la revendication 11, **caractérisé en ce que** :
- le premier moyen d'injection du gaz majoritairement inerte est composé de deux tubes coaxiaux (22,31) centrés autour du moyen d'injection du combustible (1) et du moyen d'injection du comburant, l'espace entre les deux tubes permettant le passage d'une partie du gaz majoritairement inerte et comprenant le moyen (4) apte à mettre en rotation divergente le flux de gaz majoritairement inerte le traversant.
- le deuxième moyen d'injection du gaz majoritairement inerte est composé de deux tubes coaxiaux (31, 32) centrés autour des deux tubes coaxiaux (22, 31) du premier moyen d'injection du gaz majoritairement inerte, l'espace entre les deux tubes (31, 32) du deuxième moyen d'injection du gaz majoritairement inerte permettant le passage d'une partie du gaz majoritairement inerte et comprenant le moyen (5) apte à mettre en rotation convergente le flux de gaz majoritairement inerte le traversant.

13. Brûleur selon la revendication 12, **caractérisé en ce qu'**il comprend deux moyens (21, 22) d'injection du comburant, lesdits moyens étant des tubes coaxiaux (21, 22) et **en ce que** le moyen d'injection du combustible (1) est une couronne métallique percée d'au moins une couronne d'orifices, ladite couronne métallique étant coaxiale avec les tubes d'injection du comburant (21, 22) et placée entre lesdits tubes (21, 22).

14. Procédé de conversion d'un procédé d'aéro-combustion d'un combustible dans lequel on injecte le combustible et l'air de manière à créer une flamme, en procédé d'oxy-combustion, **caractérisé en ce que** :
- on remplace l'air par un gaz oxygéné, et
- on injecte des gaz issus d'une combustion sous forme de deux jets, de manière à ce que :
. le premier jet entoure la flamme créée par le combustible et le gaz oxygéné et ledit premier jet présente un swirl divergent par rapport à ladite flamme,
. le second jet entoure le premier jet gaz issus d'une combustion et ledit second jet présente un swirl convergent par rapport à la flamme créée par le combustible et le gaz oxygéné.

## Patentansprüche

1. Verfahren zum Verbrennen zumindest eines Brennstoffes anhand von zumindest einem Oxidationsmittel und zumindest einem überwiegend inerten Gas, wobei:
- man den Brennstoff und das Oxidationsmittel injiziert, sodass eine Flamme erzeugt wird,
- man das überwiegend inerte Gas in Form von zwei Strahlen injiziert, sodass:
. der erste Strahl die Flamme umgibt, die durch den Brennstoff und das Oxidationsmittel erzeugt wird und der erste Strahl eine im Verhältnis zur Flamme divergierende Verwirbelung aufweist,
. der zweite Strahl den ersten Strahl des überwiegend inerten Gases umgibt und der zweite Strahl eine im Verhältnis zur Flamme, die durch den Brennstoff und das Oxidationsmittel erzeugt wird, konvergierende Verwirbelung aufweist.

2. Verfahren nach Anspruch 1, **dadurch gekennzeichnet, dass** das Oxidationsmittel ein sauerstoffhaltiges Gas ist, und sich das überwiegend inerte Gas aus den Gasen zusammensetzt, die aus einer Verbrennung stammen.

3. Verfahren nach dem vorhergehenden Anspruch, **dadurch gekennzeichnet, dass** sich das überwiegend inerte Gas zumindest teilweise aus den Gasen zusammensetzt, die aus der Verbrennung des Verfahrens stammen und recycelt werden.

4. Verfahren nach Anspruch 2 oder 3, **dadurch gekennzeichnet, dass** der Volumenstrom an überwiegend inertem Gas, das im ersten Strahl an überwiegend inertem Gas injiziert wird, 50 bis 97% des gesamten Volumenstroms des überwiegend inerten Gases repräsentiert.

5. Verfahren nach Anspruch 1, **dadurch gekennzeichnet, dass** das Oxidationsmittel vorzugsweise entölte Luft ist, und das überwiegend inerte Gas Luft ist.

6. Verfahren nach dem vorhergehenden Anspruch, **dadurch gekennzeichnet, dass** der Volumenstrom von als Oxidationsmittel injizierter Luft 5 bis 30% des gesamten Volumenstroms an Luft repräsentiert, der für die Verbrennung des Brennstoffes benötigt wird.

7. Verfahren nach Anspruch 5 oder 6, **dadurch gekennzeichnet, dass** der Volumenstrom von Luft, die im ersten Strahl an überwiegend inertem Gas injiziert wird, 4 bis 25% des gesamten Volumenstroms an Luft repräsentiert, der für die Verbrennung des Brennstoffes benötigt wird.

8. Verfahren nach Anspruch 1, **dadurch gekennzeichnet, dass** das Oxidationsmittel ein sauerstoffhaltiges Gas ist, und sich das überwiegend inerte Gas Luft ist.

9. Verfahren nach einem der vorhergehenden Ansprüche, **dadurch gekennzeichnet, dass** die Verwirbelungsrate eines jeden der Strahlen an überwiegend inertem Gas zwischen 0,26 und 1,73 liegt.

10. Verfahren nach einem der vorhergehenden Ansprüche, **dadurch gekennzeichnet, dass** die Strahlen an überwiegend inertem Gas die Form von Ringen aufweisen.

11. Brenner, Folgendes umfassend:
- zumindest ein Mittel zum Injizieren von Brennstoff (1) und zumindest ein Mittel zum Injizieren von Oxidationsmittel, wobei die Mittel zueinander angeordnet sind, sodass das Oxidationsmittel und der Brennstoff imstande sind, eine Flamme zu erzeugen,
- zwei Mittel zum Injizieren eines überwiegend inerten Gases:
. wobei das erste Mittel zum Injizieren des überwiegend inerten Gases in der Lage ist, einen Teil des überwiegend inerten Gases in Form eines Strahls zu injizieren, der die Flamme umgibt, die durch das Oxidationsmittel und den Brennstoff erzeugt wird, und das erste Mittel zum Injizieren des überwiegend inerten Gases ein Mittel (4) umfasst, das in der Lage ist, den Strahl an überwiegend inertem Gas, der durch das Mittel hindurchführt, in eine divergierende Drehung zu versetzen,
. wobei das zweite Mittel zum Injizieren des überwiegend inerten Gases in der Lage ist, einen Teil des überwiegend inerten Gases in Form eines Strahls zu injizieren, der den Strahl an überwiegend inertem Gas umgibt, der vom ersten Mittel zum Injizieren des überwiegend inerten Gases erzeugt wird, und das zweite Mittel zum Injizieren des überwiegend inerten Gases ein Mittel (5) umfasst, das in der Lage ist, den Strahl an überwiegend inertem Gas, der durch das Mittel hindurchführt, in eine konvergierende Drehung zu versetzen.

12. Brenner nach Anspruch 11, **dadurch gekennzeichnet, dass**:
- sich das erste Mittel zum Injizieren des überwiegend inerten Gases aus zwei koaxialen Röhren (22, 31) zusammensetzt, die um das Mittel zum Injizieren des Brennstoffes (1) und das Mittel zum Injizieren des Oxidationsmittels zentriert sind, wobei der Raum zwischen den beiden Röhren den Durchlass eines Teils des überwiegend inerten Gases ermöglicht, sowie das Mittel (4) umfassend, das in der Lage ist, den Strahl an überwiegend inertem Gas, der durch das Mittel hindurchführt, in eine divergierende Drehung zu versetzen.
- sich das zweite Mittel zum Injizieren des überwiegend inerten Gases aus zwei koaxialen Röhren (31, 32) zusammensetzt, die um die beiden koaxialen Röhren (22, 31) des ersten Mittels zum Injizieren des überwiegend inerten Gases zentriert sind, wobei der Raum zwischen den beiden Röhren (31, 32) des zweiten Mittels zum Injizieren des überwiegend inerten Gases den Durchlass eines Teils des überwiegend inerten Gases ermöglicht, sowie das Mittel (5) umfassend, das in der Lage ist, den Strahl an überwiegend inertem Gas, der durch das Mittel hindurchführt, in eine konvergierende Drehung zu versetzen.

13. Brenner nach Anspruch 12, **dadurch gekennzeichnet, dass** er zwei Mittel (21, 22) zum Injizieren des Oxidationsmittels umfasst, wobei die Mittel koaxiale Röhren (21, 22) sind und dadurch, dass das Mittel zum Injizieren von Brennstoff (1) ein metallischer Kranz ist, der mit zumindest einem Kranz mit Öffnungen durchbrochen ist, wobei der metallische Kranz mit den Röhren zum Injizieren des Oxidationsmittels (21, 22) koaxial ist und zwischen den Röhren (21, 22) platziert ist.

14. Verfahren zur Umwandlung eines Verfahrens zur Luftverbrennung eines Brennstoffes, wobei man den Brennstoff und die Luft injiziert, sodass eine Flamme erzeugt wird, in ein Verfahren zur Sauerstoffverbrennung, **dadurch gekennzeichnet, dass**:
- man die Luft durch ein sauerstoffhaltiges Gas ersetzt, und
- man Gase, die aus einer Verbrennung stammen, in Form von zwei Strahlen injiziert, sodass:
. der erste Strahl die Flamme, die durch den Brennstoff und das sauerstoffhaltige Gas erzeugt wird, umgibt und der erste Strahl eine im Verhältnis zur Flamme divergierende Verwirbelung aufweist,
. der zweite Strahl den ersten Strahl der Gase umgibt, die aus einer Verbrennung stammen, und der zweite Strahl eine im Verhältnis zur Flamme, die durch den Brennstoff und das sauerstoffhaltige Gas erzeugt wird, konvergierende Verwirbelung aufweist.

## Claims

1. Method for burning at least one fuel using an oxidiser and at least one mostly inert gas wherein:
- the fuel and the oxidizer are injected so as to create a flame,
- the mostly inert gas is injected in the form of two jets, in such a way that:
. the first jet surrounds the flame created by the fuel and the oxidiser and said first jet has a divergent swirl with respect to said flame,
. the second jet surrounds the first jet of mostly inert gas and the second jet has a convergent swirl with respect to the flame created by the fuel and the oxidizer.

2. Method according to claim 1, **characterised in that** the oxidiser is an oxygen-containing gas and the mostly inert gas is comprised of gases coming from a combustion.

3. Method as claimed in the preceding claim, **characterised in that** the mostly inert gas is comprised at least partially of gases coming from the combustion of said method and recycled.

4. Method according to claim 2 or 3, **characterised in that** the flow rate of the mostly inert gas injected into the first jet of mostly inert gas represents 50 to 97% of the total flow rate of the mostly inert gas injected.

5. Method according to claim 1 **characterised in that** the oxidiser is air, preferably de-oiled, and the mostly inert gas is air.

6. Method as claimed in the preceding claim, **characterised in that** the flow rate of air injected as an oxidiser represents 5 to 30% of the total flow rate of air required for the combustion of the fuel.

7. Method according to claim 5 or 6, **characterised in that** the flow rate of air injected into the first jet of mostly inert gas represents 4 to 25% of the total flow rate of air required for the combustion of the fuel.

8. Method according to claim 1 **characterised in that** the oxidiser is an oxygen-containing gas and the mostly inert gas is air.

9. Method according to one of the preceding claims, **characterised in that** the swirl rate of each one of the jets of mostly inert gas is between 0.26 and 1.73.

10. Method according to one of the preceding claims, **characterised in that** the jets of mostly insert gas have the form of rings.

11. Burner comprising:
- at least one means for injecting fuel (1) and at least one means for injecting oxidiser, said means being arranged with respect to one another in such a way that the oxidiser and the fuel are able to produce a flame,
- two means for injecting a mostly inert gas:
. with the first means for injecting a mostly inert gas being able to inject a portion of the mostly inert gas in the form of a jet surrounding the flamer produced by the oxidiser and the fuel, and said first means for injecting the mostly inert gas comprising a means (4) able to set into divergent rotation the flow of mostly inert gas passing through it,
. with the means for injecting mostly inert gas being able to inject a portion of the mostly inert gas in the form of a jet surrounding the jet of mostly inert gas produced by the first means for injecting the mostly inert gas, and said second means for injecting the mostly inert gas comprising a means (5) able to set into convergent rotation the flow of mostly inert gas passing through it.

12. Burner according to claim 11, **characterised in that**:
- the first means for injecting a mostly inert gas is comprised of two coaxial tubes (22, 31) centred around the means for injecting fuel (1) and the means for injecting oxidiser, with the space between the two tubes allowing for the passage of a portion of the mostly inert gas and comprising the means (4) able to place in divergent rotation the glow of mostly inert gas passing through it.
- the second means for injecting a mostly inert gas is comprised of two coaxial tubes (31, 32) centred around the two coaxial tubes (22, 31) of the first means for injecting a mostly inert gas, with the space between the two tubes (31, 32) of the second means for injecting a mostly inert gas allowing for the passage of a portion of the mostly inert gas and comprising the means (5) able to place in convergent rotation the flow of mostly inert gas passing through it.

13. Burner according to claim 12, **characterised in that** it comprises two means (21, 22) for injecting oxidiser, said means being coaxial tubes (21, 22) and **in that** the means for injecting fuel (1) is a metal crown pierced with at least one crown of orifices, said metal crown being coaxial with the tubes for injecting oxidiser (21, 22) and placed between said tubes (21, 22).

14. Method for converting an aero-combustion method of a fuel wherein the fuel and the air are injected in such a way as to create a flame, into an oxycombustion method, **characterised in that**:
- the air is replaced with an oxygen-containing gas, and
- gases coming from a combustion are injected in the form of two jets, in such a way that:
. the first jet surrounds the flame created by the fuel and the oxygen-containing gas and said first jet has a divergent swirl with respect to said flame,
. the second jet surrounds the first jet of gases coming from a combustion and said second jet has a convergent swirl with respect to the flame created by the fuel and the oxygen-containing gas.
